# EUROPEAN PATENT SPECIFICATION

(11) **EP 2 990 278 B1**
(45) Date of publication and mention of the grant of the patent: **05.04.2017**
(21) Application number: 15182371.3
(22) Date of filing: 25.08.2015
(51) Int. Cl.: B60T 13/22

(54) **A POWERED VEHICLE INCLUDING A SPRING-APPLIED HYDRAULIC RELEASE (SAHR) BRAKE**
ANGETRIEBENES FAHRZEUG MIT EINER SAHR-BREMSE (SPRING-APPLIED HYDRAULIC RELEASE)
VÉHICULE MOTORISÉ COMPRENANT UN FREIN SAHR (SPRING-APPLIED HYDRAULIC RELEASE)

(30) Priority: 26.08.2014 IT MO20140244
(43) Date of publication of application: 02.03.2016
(73) Proprietor: CNH Industrial Italia S.p.A., 10135 Torino (IT)
(72) Inventor: ANTOON G., VERMEULEN, 8020 Ruddervoorde (BE)
(74) Representative: CNH Industrial IP Department

(56) References cited:
- GB-A- 1 206 833
- GB-A- 1 462 209

## Description

The invention relates to a powered land vehicle including at least one spring-applied hydraulic release (SAHR) vehicle brake.

In such a brake first and second brake elements, mounted respectively on a rotatable part of the drive train of the vehicle such as a rotatable wheel on the one hand and on a non-rotatable part such as a suspension component or the vehicle frame on the other are moveable between mutually engaged and separated configurations.

In the separated configuration the rotatable component is free to rotate, thereby permitting the transmission of drive from e.g. a diesel engine forming part of the vehicle to a ground-engaging member such as a wheel including a tyre. In the mutually engaged configuration the second element brakes rotation of the rotatable component supporting the first brake element with the result that the transmission of drive is prevented and therefore the vehicle as a whole is braked.

In almost all cases the second brake element is moveable towards and away from the first brake element. A resiliently deformable spring such as a coil spring acts on the second brake element or on a member connected thereto in order to bias it into engagement with the first brake element.

The second brake element includes or is connected to a piston in a chamber having a connection to a hydraulic control circuit that is capable of applying pressure to the piston and hence indirectly to the second brake element itself. The hydraulic control circuit is selectively capable of being energised in order to assure separation of the first and second brake elements under normal circumstances. As a result the rotatable element is maintained able to rotate most of the time.

When the vehicle operator selects the brake function however control elements connected to the hydraulic control circuit cause venting of the fluid pressure acting on the piston. This in turn permits the resiliently deformable spring to urge the second brake element into engagement with the first, whereby application of the SAHR brake occurs in order to brake the vehicle regardless of the output of the engine or operative status of a variable-ratio transmission forming part of the drive train of the vehicle.

Thus the SAHR vehicle brake serves primarily as a park brake that is intended reliably to brake the vehicle when it is stationary, regardless of whether the engine of the vehicle is running. The design of the SAHR brake lends itself to this use because the presence of the resiliently deformable spring maintains the vehicle in a braked condition even when the engine is switched off.

SAHR vehicle brakes typically are fitted in large, powered land vehicles such as tractors, combine harvesters, forage harvesters and other harvesting machines, excavators, bulldozers, utility vehicles such as farm loaders and multipurpose farm vehicles, mobile cranes, and similar vehicles that while designed to perform specialised tasks usually in off-road situations nonetheless are intended to travel on roads between work sites. SAHR vehicle brakes are required in such vehicles to provide for operator and third party safety in both on-road and off-road situations. The invention is of utility in all vehicles of the general kind listed above, together with numerous further vehicle types.

GB 1 206 833 A discloses a vehicle including a SAHR brake and a non-electric control circuit to disengage the brakes.

As indicated the braking systems of large vehicles of the general category indicated typically are electrohydraulic and therefore consist of braking elements the mutual engagement and separation of which is under the control of one or more hydraulic circuits. The hydraulic circuits include circuit components such as valves the operating states of which are alterable between two or more configurations through the action of electrically powered elements such as solenoids that move moveable parts of the valves from one position to another.

SAHR vehicle brakes by reason of the permanent tendency of the spring to urge the brake elements into engagement include failure safety in their designs. A drawback of this however is that in the event of a sudden failure of the electrical system forming part of the electrohydraulic braking arrangement the SAHR brake can be applied very rapidly and without warning. If such a scenario arises while the vehicle is moving it can lead to vehicle accidents that in view of the large sizes of the vehicles in which SAHR vehicle brakes are installed have the potential to be very serious.

Thus there is a need for failure safety in SAHR vehicle brakes such that in the event of e.g. an electrical failure involving the control elements of the electrohydraulic circuit while the vehicle is moving (or while the vehicle is moving at a speed that is greater than a threshold level) the brake does not automatically apply as outlined above.

There is a further need that a vehicle operator should remain capable of applying the SAHR in order to meet a park braking requirement at zero or a chosen low vehicle speed even if there has been an electrical failure involving the control elements of the circuit.

It is furthermore desirable for the SAHR brake to be operable even when the vehicle ignition is switched off; and for the SAHR brake under non-fault conditions to be capable of automatically releasing when the vehicle starts to move following a period of non-movement. When the SAHR brake is applied in a stationary vehicle/parking situation the braking effort should be sufficient to assure non-movement of the vehicle at least on an incline the gradient of which is less than a predetermined threshold.

Yet a further requirement in the art is for an SAHR brake that can be applied safely, i.e. progressively under operator control, and not suddenly, in an emergency braking situation.

According to the invention in a first aspect there is provided a powered vehicle including a power source for generating energy to power the vehicle; a spring-applied hydraulic release (SAHR) vehicle brake comprising first and second mutually engageable brake elements the first of which is secured to or forms part of a rotatable element of the drive train of the vehicle and the second of which is non-rotatably moveably mounted on the vehicle such that the first and second elements are mutually engageable with and separable from one another, mutual engagement of the brake elements causing braking of rotation of the rotatable element, the SAHR vehicle brake including (i) a resiliently deformable member acting on the second brake element so as to urge the first and second brake elements into mutual engagement and (ii) a non-electric control circuit for applying pressure to the second brake element so as to oppose the action of the resiliently deformable member and thereby normally maintain the first and second brake elements separated from one another, characterised in that the vehicle includes an energy convertor for generating energy in the control circuit in proportion to the speed of the vehicle and/or the energy generated by the power source, the energy convertor energising the control circuit while the speed of the vehicle and/or the energy generated by the power source exceeds a threshold and de energising the control circuit to permit mutual engagement of the first and second elements under the influence of the resiliently deformable member when the speed of the vehicle and/or the energy generated by the power source is less than the threshold.

Such an arrangement advantageously accommodates the requirement, set out above, to prevent unwanted actuation of the SAHR brake while the vehicle is in motion at a speed greater than the threshold. As long as the threshold speed is established at a sufficiently low value this assures that SAHR brake-derived accidents do not occur.

By "non-electric" as used herein is meant a control circuit or control element that does not require the application of electrical power in order to effect a required control action. This does not necessarily mean that the parts of the control circuit do not contain electrically actuated elements. Rather, the characteristic of such a control circuit is that a preferred or chosen control action is performed without the involvement of electrical energy.

References herein to the "drive train" of the vehicle may include non-driven axles or wheels, such as the steerable front wheels of a four-wheeled, rear wheel drive vehicle.

Preferably in embodiments of the invention the control circuit is a fluid power circuit (especially an hydraulic circuit) and the energy convertor converts rotational energy in the drive train of the vehicle to fluid pressure in the control circuit. As noted however such a circuit may include components that are partially actuated electrically or indeed by means of other energy sources.

Preferably the vehicle includes at least one rotatable shaft rotation of which occurs in proportion to the speed of the vehicle and/or the energy generated by the power source, the energy convertor including a hydraulic pump that is driven by the rotatable shaft also in proportion to the speed of the vehicle and/or the energy generated by the power source. Such an arrangement efficiently converts drive energy of the vehicle to control (fluid) energy in a proportional manner that is consistent with the speed threshold requirement set out above.

Conveniently the rotatable shaft includes an eccentric (i.e. a circular or otherwise shaped cam or wheel that rotates on an axle that is displaced from the focus of the circle described by the wheel, cam, etc.) and the hydraulic pump includes a piston that is slideably mounted in a fluid-filled convertor cylinder and biassed by a biasser into contact with the eccentric whereby rotation of the eccentric causes reciprocation of the piston in the cylinder and hence pressurising of the fluid therein.

Such an arrangement efficiently converts rotational energy of e.g. a drive shaft or wheel axle of the vehicle to fluid pressure, in a proportional manner that assists in meeting the aims set out above.

In a preferred embodiment of the invention the fluid-filled cylinder includes an outlet fluid line including a one-way check valve via which fluid pressurised in the cylinder pilots one or more elements of the non-electric control circuit. This arrangement beneficially assures that the piloted element(s) of the control circuit are influenced (piloted) only when the hydraulic pump pressure is positive, and return strokes of the piston therefore do not create suction or low pressure in the pilot line.

Particularly preferably the outlet fluid line includes a fluid bleed line having, in series, a first flow restriction, a one-way check valve and a further flow restriction, the fluid bleed line defining a fluid inlet to the fluid-filled convertor cylinder and further being connected to a buffer fluid reservoir between the first and further flow restrictions whereby to accommodate variations in the pressure of fluid in the outlet fluid line caused by reciprocation of the piston.

This arrangement in effect smooths fluid pressure peaks that would otherwise result from reciprocation of a single cylinder pump. Thus the pressure generated in order to pilot the one or more elements of the control circuit approximates, for almost all the travel of the piston, to an average determined by the degree of restriction provided by the flow restrictors and the speed of reciprocation of the piston. Moreover the arrangement establishes a pilot pressure threshold that is not met unless the rate of reciprocation of the piston is high enough.

Preferably the piston includes secured thereto a roller that bears against the eccentric whereby to transfer energy from the eccentric to the piston. The optional roller represents one preferred way, of several, for ensuring efficient conversion of rotational energy of the eccentric to reciprocating motion of the piston.

The foregoing paragraphs define one form of energy convertor lying within the scope of the invention. Other means of converting the energy of the power source (typically a diesel engine) of the vehicle to control energy in a proportional manner however also lie within the scope of the invention as claimed.

In preferred embodiments of the invention the second brake element is connected to a piston that is slideably received in a fluid-filled brake cylinder, the resiliently deformable member acting on the piston and a fluid pump supplying pressurised fluid to the fluid-filled brake cylinder via a feed line tending to oppose the action of the resiliently deformable member. Such an arrangement preferably also includes a fluid release valve in a fluid drain line connected to the fluid-filled brake cylinder, the fluid release valve being biassed to a normally open configuration whereby pressurised fluid drains from the brake cylinder and being arranged to be piloted by energy converted by the energy convertor, when the speed of the vehicle and/or the energy generated by the power source exceeds the threshold, to a closed configuration whereby fluid pressure in the brake cylinder opposes the action of the resiliently deformable member.

The fluid drain line may with the fluid release valve be regarded as the primary non electric control element of the control circuit. Since the normally open (e.g. spring biassed) release valve is piloted by pressure generated in the hydraulic pump control of the fluid pressure applied to act on the second brake element may be effected non-electrically.

The drain line may however optionally also include connected in series with the fluid release valve a solenoid valve that is biassed to a normally open configuration and includes a solenoid actuator that when energised opposes the bias of the solenoid valve, causing the solenoid valve to adopt a closed configuration. Such a refinement permits linking of the non-electric control circuit and the electrical / electronic control systems that typically are present in vehicles of the kind to which the invention pertains. Thus during non-faulty operation the SAHR brake of the invention may include what in effect is an electrically activated fail-safe mode, as described in more detail below.

In all embodiments of the invention the fluid drain line optionally may connect to a fluid drain or tank at an end remote from the brake cylinder. Such a drain or tank beneficially may serve as a fluid source for further fluid power components, as is conventional in the fluid power art.

The vehicle of the invention also may advantageously include a proportional bypass line connecting the fluid drain line to the drain or tank via a proportional control valve actuation of which causes progressively increasing bleeding of pressurised fluid from the brake cylinder thereby progressively causing application of the SAHR brake. This aspect of the invention permits the gradual or progressive application of the SAHR brake under the control of the driver of the vehicle.

Further preferably the proportional control valve is a solenoid actuated valve that is biassed to a normally closed configuration. Thus the electrical / electronic control components of the vehicle may be used when appropriately commanded to activate the SAHR brake in a progressive manner, notwithstanding the essentially non-electric operational mode that is the primary route to activation of the SAHR brake.

The proportional valve optionally may also include a manually actuated valve that is biassed to a normally closed configuration. Such a feature may be an alternative to the solenoid-actuation defined above, or may be an adjunct to it.

Conveniently, in a preferred embodiment of the invention, the vehicle may include a pressure sensor sensing fluid pressure in the brake cylinder, the pressure sensor being operatively connected to one or more alarm devices for notifying of adverse pressure conditions in the brake cylinder. Such a sensor may be used to provide alerts as to the operational status of the SAHR brake e.g. via a vehicle cab display.

In preferred embodiments of the invention moreover the proportional control valve may include one or more ports supplying pressurised fluid to one or more brakes of a trailer towed by the vehicle. As a result the ability progressively to apply the SAHR brake may be simultaneously replicated in the brakes of a braked trailer, thereby providing for safe control of a vehicle-trailer combination.

There now follows a description of preferred embodiments of the invention, by way of non-limiting example, with reference being made to the accompanying drawing that shows in schematic form a hydraulic control circuit of a vehicle in accordance with the invention.

In the drawing figure selected parts of a vehicle, such as but not limited to those listed above, defining a SAHR and control arrangement therefor in accordance with the invention are shown. Thus the major components of the vehicle such as the vehicle frame, engine, transmission, drivetrain, cab and fuelling parts are omitted from the figure for clarity, as are additional features such as hydraulically powered arms and booms that permit specialised vehicles of the kinds exemplified to carry out various tasks.

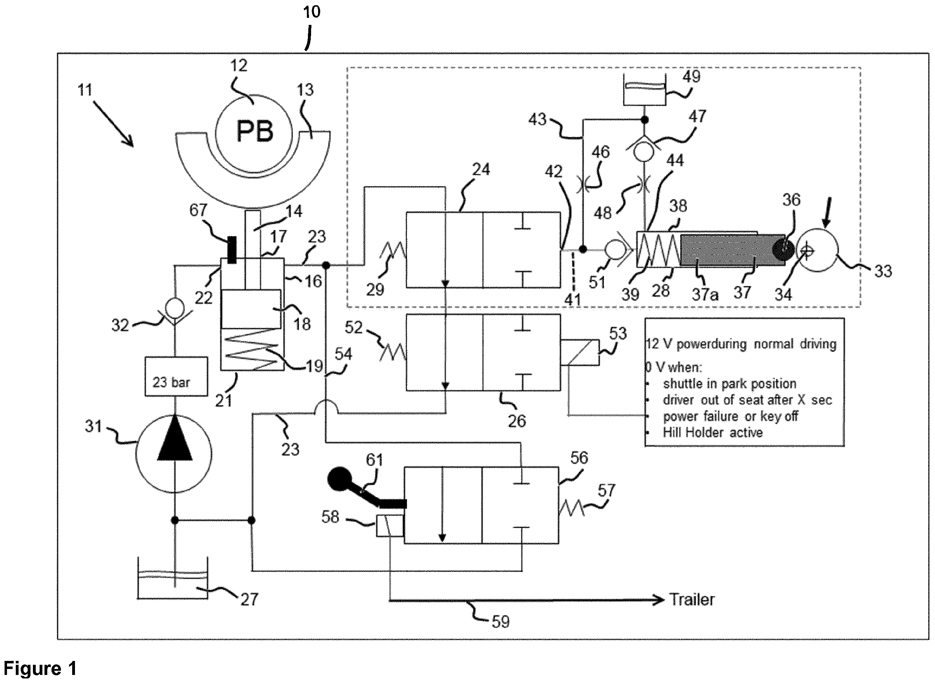

In Figure 1 these parts of the vehicle that are not shown in detail are represented schematically by reference numeral 10.

A SAHR brake represented generally by numeral 11 includes a first brake element 12 in the form (in the embodiment shown, although it may take other forms in other embodiments) of a brake disc or drum secured to the axle of a ground-engaging wheel of the vehicle. The first brake element 12 therefore is rotatable and rotates with the wheel with which it is associated, in the conventional manner of brake discs and drums.

In other embodiments of the invention the first brake element could be secured to e.g. a drive shaft such that the SAHR when operative brakes the drive shaft as opposed to a wheel.

A second brake element 13 in the form of a brake pad is moveably, non-rotatably secured to the vehicle 10 e.g. by reason of being mounted on the vehicle frame or a suspension component.

Second brake element 13 is schematically illustrated as a cup-shaped pad that is shaped to bear against the first brake element that in the figure is shown as a circular disc.

Second brake element 13 includes a piston rod 14 protruding rearwardly from it in a direction away from first brake element 12.

Piston rod 14 passes through a sealing aperture 17 in a fluid-tight chamber 16. The nature of the sealing of the aperture 17 relative to the piston rod 14 is to permit sliding movement of the piston rod 14 into and out of the chamber 16 while preventing the egress of hydraulic fluid in the chamber 16.

At its end remote from second brake element 13 piston rod 14 terminates in a piston 18 that slidingly sealingly spans chamber 16 in a manner that is familiar to those skilled in the hydraulic system art.

On the rear face of piston 18 opposite piston rod 14 a resiliently deformable spring 19 is anchored at one end at the end wall 21 of chamber 16 lying opposite the aperture 17 and bears against piston 18 as illustrated.

A hydraulic fluid port 22 allows pressurised hydraulic fluid to act as described below on the front face of piston 18 from which piston rod 14 protrudes. As a result the piston is moveable between limits defined approximately by the aperture 17 and end wall 21 under the influence of hydraulic fluid pressure on the one hand and the spring 19 on the other. By controlling the fluid pressure acting in the chamber 16 it is possible to control the position of the piston with the result that the SAHR brake 11 as a whole permits the second brake element 13 to move towards and away from the first brake element 12 to cause mutual engagement or separation respectively of the brake elements 12, 13.

The SAHR brake thus includes in the form of the spring 19 a resiliently deformable member that urges the first and second brake elements 12, 13 into mutual engagement; and (as described below) a hydraulic circuit that may operate to oppose the effect of the spring 19 and maintain separation of the brake elements 12, 13.

When the elements 12, 13 are mutually engaged braking of the rotation of the wheel or shaft to which first brake element is secured takes place; and when they are separated the wheel or shaft is freely rotatable.

The circuit includes a drain line 23 connected selectively to permit draining or exhausting of fluid from inside the chamber 16, whereby in combination with fluid supplied via port 22 to control the position of the piston 18. The balance of pressure between the port 22 and drain line 23 determines the position of the piston 18 in the chamber 16.

Drain line 23 includes connected in series a fluid release valve 24 and a solenoid valve 26, and terminates in a drain or tank 27.

The fluid release valve 24 in the embodiment illustrated is a spring-biassed, normally open valve that is piloted by an energy convertor in the form of a hydraulic pump 28 that is described in more detail below.

The fluid release valve 24 may in accordance with the invention take a range of forms, but the two-position, normally open spool valve design schematically shown in the drawing figures is preferred because of its suitability for the use expected in the apparatus of the invention.

As noted fluid release valve 24 is biased by a spring 29 to a normally open configuration in which the passage of fluid from the chamber 16 towards the tank 27 is permitted. When the bias of the spring 29 is overcome by pilot pressure from hydraulic pump 28 the valve adopts a closed configuration preventing fluid flow along drain line 23.

Port 22 is fed by a pump 31 that draws hydraulic fluid from drain/tank 27 and pumps it via one-way check valve 32 at a preferred pressure of about 23 bar to the port 22. The pump 31 is powered by the energy source, of the vehicle 10, that as noted typically is a diesel engine. A pressure in the pumped hydraulic fluid of about 23 bar is typical in vehicle fluid power circuits, although the invention is not limited to arrangements in which pressures of this magnitude prevail.

The effect of closing of valve 24 is that the pump pressure applied at port 22 develops across the face of piston 18. This in turn causes the piston 18 to move in a direction overcoming the bias of spring 19, thereby withdrawing second brake element 13 out of engagement with first brake element 12. As a result the first brake element 12 is free to rotate as a result of the SAHR brake being in an inoperative condition.

The hydraulic pump 28 and the release valve 24 constitute the primary control parts of the circuit of the invention. As explained above, and as described in more detail below, these parts of the circuit operate under the influence of fluid pressure and spring biassing such that no electrical parts are involved in their operation. This in turn means that the basic forms of activation and deactivation of the SAHR brake are not dependant on correct functioning of e.g. an electrical or electronic control circuit associated with the vehicle 10.

The hydraulic pump 28 includes a rotatable shaft 33 that is or includes an eccentric that in the drawing figure is represented by laterally offset axis 34. A roller 36 that is rotatably secured in a free end of an elongate piston 37 bears against eccentric 34.

Shaft 33 is keyed to or formed integrally with a shaft of the drive train connected permanently with the wheels of the vehicle 10 such that the rotational speed of shaft 33 is proportional to the speed of the vehicle. References to the speed of the vehicle may relate to either forward motion over the ground or reverse motion, the invention being effective regardless of whether a forward or reverse transmission ratio, forming part of the drive train of the vehicle, is selected.

The major part of the length of piston 37 is slideably received within a hollow cylinder 38. The end 37a of piston 37 that lies remote from roller 36 is spaced from the internal end of cylinder 38 by a resiliently deformable member 39 that in the preferred embodiment of the invention is a spring but could take other forms in other embodiments.

The effect of spring 39 is to bias roller 36 into engagement with eccentric 34. As a consequence rotational motion of the eccentric 34 on shaft 33.causes reciprocating motion of the piston 37 inside cylinder 38.

The space between end 37a of piston 37 and the interior end wall of cylinder 38 is filled with hydraulic fluid, with the result that the cylinder 38 may be regarded as being fluid-filled. An outlet fluid line 41 permits the flow of fluid from the inside of cylinder 38 to a pilot port 42 of valve 24, whereby fluid pressure in fluid outlet line 41 pilots the valve 24.

The reciprocal motion of the piston 37 results in cyclical pressurising of fluid in outlet line 41. This is not ideally suitable for piloting of valve 24 so an optional bleed line 43 is provided in order to smooth the output of the hydraulic pump 28.

Bleed line 43 branches from outlet line 41 and feeds to an inlet port 44 via which bled hydraulic fluid returns to the interior of cylinder 38. Bleed line 43 includes connected in series a first flow restriction 46, a one-way check valve 47 and a further flow restriction 48; and in parallel a drain or tank 49 that acts as a fluid buffer.

An additional one-way check valve 51 is connected in line in fluid outlet line 41 as illustrated.

The effect of additional one-way check valve 51 is to ensure that hydraulic fluid flows along fluid outlet line 41 to pilot valve 24 only when the pressure generated by motion of piston 37 overcomes the seating bias of the additional check valve 51. Any pressure in excess of that required to pilot the valve 24 flows via bleed line 43 and is returned to the cylinder 38 via port 44 unless the cylinder capacity is met, in which case excess fluid feeds to parallel-connected drain or tank 49. Thus any pressure peaks that would otherwise develop in outlet line 41 are smoothed, and overall the pressure in outlet line 41 is approximately the average developed by piston 37 acting on fluid in the cylinder 38.

As a result of this arrangement piloting of valve 24 takes place when the average pressure generated by the hydraulic pump 28 exceeds a threshold value, and does not occur when the average pressure is less than the threshold. Since the pressure generated is proportional to the speed of rotation of the eccentric 34 piloting of valve 24 occurs in dependence on either the speed of the vehicle or, at the option of the system designer, the power output of the diesel engine or other energy source of the vehicle.

In this regard the output of the hydraulic pump 28 is proportional to the speed of the vehicle when the eccentric is secured on a drive shaft or driven axle of the vehicle; and is proportional to the output of the power source when secured to e.g. an idler shaft or counterbalance shaft that does not directly contribute to motion of the vehicle but nonetheless the speed of rotation of which is proportional to the engine output.

In addition to the parts described the drain line 23 includes in the illustrated embodiment of the invention in series with the release valve 24 an optional solenoid valve 26.

Solenoid valve 26 is biased by a further spring 52 to a normally open configuration in which fluid may feed along drain line 23 to drain/tank 27. A solenoid actuator 53 operating under the control of commands generated in e.g. an electronic control system forming part of the vehicle 10 operates to overcome the bias of the spring 52.

The arrangement of solenoid valve 26 is such that during normal operation of the vehicle 10 the solenoid 53 is powered (e.g. but not necessarily by way of a 12v power line) to maintain the valve 26 in its closed condition. This maintains the drain line 23 closed, regardless of whether the release valve 24 also adopts its open configuration. The result of this is that fluid pressure generated by pump 31 (which preferably runs continuously) develops across the face of piston 18 and the SAHR brake is maintained in its inoperative condition such that first brake element 12 is free to rotate.

In the event of the power to solenoid 53 reducing to zero the valve 26 adopts its open configuration as a result of the bias of spring 52 (which at this time is no longer opposed by the solenoid 53). If the release valve 24 is in its open configuration pump pressure in chamber 16 then is exhausted via drain line 23 with the result that spring 19 forces second brake element 13 into braking engagement with first brake element 12.

Events that could result in the power to solenoid 53 reducing to zero may include:
- selection of the "park" position of a transmission shift lever;
- activation of a seat sensor indicating that the vehicle driver is out of his seat;
- intentional depowering of the vehicle e.g. as signified by removal of a smart key from an associated port in the vehicle cab;
- an electrical power failure; or
- activation of a temporary braking command employed when manoeuvring on an incline (a so-called "hill holder" braking command).

Other events also could trigger depowering of the solenoid 53, as chosen by the vehicle designer. Moreover certain combinations of events could produce similar effects. As an example it may be possible to remove a smart key only after selecting the shift lever park position, and the software of the vehicle may command the solenoid 53 to be depowered only once this sequence is complete. All such aspects may be adjusted within the scope of the invention, typically in dependence on the programming of a programmable device such as a microprocessor that forms part of an electronic control sub-system of the vehicle.

Additionally or alternatively the software could include a delay in activation of the SAHR brake via the solenoid valve 26 when a driver out-of-seat signal is generated by a seat-mounted sensor. As a consequence a short-lived exiting (as may occur when the vehicle driver momentarily stands in the cab to gain a better view of the ground near the vehicle) would not result in activation of the SAHR brake whereas exiting of the driver from the cab, as would result in a signal duration of several seconds, would cause activation.

Although the solenoid valve 26 is electrically operated it does not form part of the primary control of the SAHR brake and moreover includes a key control action, as described, that takes effect in the absence of electrical power for the solenoid.

A further optional feature of the invention is proportional bypass line 54 including series-connected proportional control valve 56.

Proportional bypass line 54 interconnects the ends of fluid outlet line 23 such as to bypass the valves 24 and 26. Proportional control valve 55 is a spring-biased, solenoid activated normally closed valve including a biasing spring 57 and solenoid 58.

Proportional control valve 56 may be opened during operation of the vehicle 10 by way or commands sent to solenoid 58 in order to overcome the biasing effect of spring 57. Since valve 56 is a proportional valve the degree of its opening, and hence the extent to which drain line 23 is bypassed, may be progressively adjusted with the outcome that commands sent to the solenoid 58 may cause progressive or gradual application of the SAHR brake. The SAHR brake may thus optionally be used as an electrically actuated duty brake without the emergency and safety-related operational modes described above being compromised.

Proportional control valve 56 is also illustrated as including an optional signal transmission line 59 that may be connected to the solenoid of a brake valve of a trailer towed by the vehicle 10 such that the solenoid command signal is replicated in the trailer brake solenoid. As a consequence the proportional braking of the trailer may be matched by braking of the trailer, without any risk of "over-braking" or "underbraking" of either the vehicle 10 or the trailer.

Valve 56 additionally may include (or may include as an alternative to solenoid 58) a proportional manual control represented in Figure 1 by lever 61. This permits manual application of the SAHR brake regardless of the status of the remainder of the components described. This is useful e.g. in the event of an electrical power failure or even failure of the vehicle power source.

A further optional but desirable feature of the preferred embodiment of the invention is a pressure sensor 61 that senses fluid pressure in brake cylinder 16. This may trigger e.g. a cab alarm in the event of the fluid pressure exceeding or falling below safety threshold limits.

Although the configuration of a preferred embodiment of the invention has been described the invention may take other forms than that shown. In particular the hydraulic pump 28 may adopt a range of designs; and indeed non-pump means of converting energy of the power source to a piloting activation of the release valve 24 may be employed.

Overall the invention provides a highly versatile SAHR-based braking system that provides improved safety compared with prior art arrangements.

## Claims

1. A powered vehicle (10) including a power source for generating energy to power the vehicle; a spring-applied hydraulic release (SAHR) vehicle brake (11) comprising first (12) and second (13) mutually engageable brake elements the first (12) of which is secured to or forms part of a rotatable element of the drive train of the vehicle and the second (13) of which is non-rotatably moveably mounted on the vehicle (10) such that the first and second elements (12, 13) are mutually engageable with and separable from one another, mutual engagement of the brake elements (12, 13) causing braking of rotation of the rotatable element, the SAHR vehicle brake (11) including (i) a resiliently deformable member (19) acting on the second brake element (13) so as to urge the first and second brake elements (12, 13) into mutual engagement and (ii) a non-electric control circuit for applying pressure to the second brake element (13) so as to oppose the action of the resiliently deformable member (19) and thereby normally maintain the first and second brake elements (12, 13) separated from one another, **characterised in that** the vehicle includes an energy convertor (28) for generating energy in the control circuit in proportion to the speed of the vehicle (10) and/or the energy generated by the power source, the energy convertor (28) energising the control circuit while the speed of the vehicle (10) and/or the energy generated by the power source exceeds a threshold and de energising the control circuit to permit mutual engagement of the first and second elements (12, 13) under the influence of the resiliently deformable member (19) when the speed of the vehicle (10) and/or the energy generated by the power source is less than the threshold.

2. A vehicle (10) according to Claim 1 wherein the control circuit is a fluid power circuit and wherein the energy convertor (28) converts rotational energy in the drive train of the vehicle (10) to fluid pressure in the control circuit.

3. A vehicle (10) according to Claim 2 including at least one rotatable shaft (33) rotation of which occurs in proportion to the speed of the vehicle (10) and/or the energy generated by the power source, the energy convertor including a hydraulic pump (28) that is driven by the rotatable shaft (33) also in proportion to the speed of the vehicle (10) and/or the energy generated by the power source.

4. A vehicle (10) according to Claim 3 wherein the rotatable shaft (33) includes an eccentric (34) and wherein the hydraulic pump (28) includes a piston (37) that is slideably mounted in a fluid-filled convertor cylinder (38) and biassed by a biasser (39) into contact with the eccentric (34) whereby rotation of the eccentric (34) causes reciprocation of the piston (37) in the cylinder (38) and hence pressurising of the fluid therein.

5. A vehicle (10) according to Claim 4 wherein the fluid-filled cylinder (38) includes an outlet fluid line including a one-way check valve (51) via which fluid pressurised in the cylinder pilots one or more elements of the non-electric control circuit.

6. A vehicle (10) according to Claim 5 wherein the outlet fluid line includes a fluid bleed line (43) having, in series, a first flow restriction (46), a one-way check valve (47) and a further flow restriction (48), the fluid bleed line (43) defining a fluid inlet to the fluid-filled convertor cylinder (38) and further being connected to a buffer fluid reservoir (49) between the first (46) and further (47) flow restrictions whereby to accommodate variations in the pressure of fluid in the outlet fluid line caused by reciprocation of the piston (37).

7. A vehicle (10) according to any of Claims 4 to 6 wherein the piston (37) includes secured thereto a roller (36) that bears against the eccentric (34) whereby to transfer energy from the eccentric (34) to the piston (37).

8. A vehicle (10) according to any preceding claim wherein the second brake element (13) is connected to a piston (14) that is slideably received in a fluid-filled brake cylinder (16), the resiliently deformable member (19) acting on the piston (14) and a fluid pump (31) supplying pressurised fluid to the fluid-filled brake cylinder (16) via a feed line tending to oppose the action of the resiliently deformable member (19).

9. A vehicle (10) according to Claim 8 including a fluid release valve (24) in a fluid drain line (23) connected to the fluid-filled brake cylinder (16), the fluid release valve (24) being biassed to a normally open configuration whereby pressurised fluid drains from the brake cylinder (16) and being arranged to be piloted by energy converted by the energy convertor (28), when the speed of the vehicle (10) and/or the energy generated by the power source exceeds the threshold, to a closed configuration whereby fluid pressure in the brake cylinder (16) opposes the action of the resiliently deformable member (19).

10. A vehicle (10) according to Claim 9 wherein the drain line (23) includes connected in series with the fluid release valve (24) a solenoid valve (26) that is biassed to a normally open configuration and includes a solenoid actuator (53) that when energised opposes the bias of the solenoid valve (26), causing the solenoid valve (26) to adopt a closed configuration.

11. A vehicle (10) according to Claim 9 or Claim 10 wherein the fluid drain line (23) connects to a fluid drain or tank (27) at an end remote from the brake cylinder (16), and wherein the vehicle (10) includes a proportional bypass line (54) connecting the fluid drain line (23) to the drain or tank (27) via a proportional control valve (56) actuation of which causes progressive increasing bleeding of pressurised fluid from the brake cylinder (16) thereby progressively causing application of the SAHR brake (11).

12. A vehicle (10) according to Claim 8 or any preceding claim depending therefrom including a pressure sensor (61) sensing fluid pressure in the brake cylinder (16), the pressure sensor being operatively connected to one or more alarm devices for notifying of adverse pressure conditions in the brake cylinder (16).

13. A vehicle (10) according to Claim 11 or any preceding claim depending therefrom wherein the proportional control valve (56) includes one or more ports (59) for supplying pressurised fluid to one or more brakes of a trailer towed by the vehicle.

14. A vehicle (10) according to Claim 10 or any preceding claim depending therefrom wherein the solenoid valve (26) and the proportional control valve (56) are electrically actuated and the vehicle includes one or more control devices for controlling operation of the said valves (26, 56).

15. A vehicle (10) according to Claim 14 wherein one or more said controllers detects (i) the speed of the vehicle (10) and (ii) whether an operator-commanded parking braking requirement exists and determines adjustment of the said valves (26, 56) in dependence on the detected speed and the existence or absence of a commanded parking braking requirement.

## Patentansprüche

1. Ein angetriebenes Fahrzeug (10), das eine Leistungsquelle zur Erzeugung von Energie zur Leistungsversorgung des Fahrzeuges; eine Fahrzeugbremse mit einer durch Federkraft angelegtem und hydraulisch gelösten Fahrzeugbremse (SAHR) (11), die erste (12) und zweite (13) miteinander in Eingriff bringbare Bremseelemente aufweist, von denen das erste (12) an einem drehbaren Element des Antriebsstranges des Fahrzeuges befestigt oder einen Teil des drehbaren Elementes bildet, während das zweite (13) hiervon nicht drehbar beweglich an dem Fahrzeug (10) befestigt ist, derart, dass die ersten und zweiten Elemente (12, 13) miteinander in Eingriff bringbar und voneinander trennbar sind, wobei der gegenseitige Eingriff der Bremselemente (12, 13) ein Bremsen der Drehung des beweglichen Elementes bewirkt, wobei die SAHR-Fahrzeugbremse (11) (i) ein elastisch verformbares Bauteil (19), das auf das zweite Bremselement (13) einwirkt, um die ersten und zweiten Bremselemente (12, 13) in einen gegenseitigen Eingriff zu bringen und (ii) eine nicht elektrische Steuerschaltung zur Ausübung eines Druckes auf das zweite Bremselement (13) einschließt, um der Wirkung des elastisch verformbaren Bauteils (19) entgegenzuwirken und auf diese Weise normalerweise die ersten und zweiten Bremselemente (12, 13) voneinander getrennt zu halten, **dadurch gekennzeichnet, dass** das Fahrzeug einen Energie-Wandler (28) zur Erzeugung von Energie in der Steuerschaltung proportional zu der Geschwindigkeit des Fahrzeuges (10) und/oder der von der Leistungsquelle erzeugten Energie einschließt, wobei der Energie-Wandler (28) die Steuerschaltung mit Energie versorgt, während die Geschwindigkeit des Fahrzeuges (10) und/oder die von der Leistungsquelle erzeugte Energie einen Schwellenwert übersteigt, und die Steuerschaltung abschaltet, um den gegenseitigen Eingriff der ersten und zweiten Elemente (12, 13) unter dem Einfluss des elastisch verformbaren Bauteils (19) zu ermöglichen, wenn die Geschwindigkeit des Fahrzeuges (10) und/oder die von der Leistungsquelle erzeugte Energie kleiner als der Schwellenwert ist.

2. Ein Fahrzeug (10) nach Anspruch 1, bei dem die Steuerschaltung eine Strömungsmittel-Leistungsschaltung ist, und bei der der Energie-Wandler (28) Drehenergie in dem Antriebsstrang des Fahrzeuges (10) in einen Strömungsmitteldruck in dem Steuerkreis umwandelt.

3. Ein Fahrzeug (10) nach Anspruch 2, das zumindest eine drehbare Welle (33) einschließt, deren Drehung proportional zur Geschwindigkeit des Fahrzeuges (10) und/oder der von der Leistungsquelle erzeugten Energie erfolgt, wobei der Energie-Wandler eine Hydraulikpumpe (28) einschließt, die von der drehbaren Welle (33) ebenfalls proportional zur Geschwindigkeit des Fahrzeuges (10) und/oder der von der Leistungsquelle erzeugten Energie angetrieben wird.

4. Ein Fahrzeug (10) nach Anspruch 3, bei dem die drehbare Welle (33) einen Exzenter (34) einschließt, und bei dem die Hydraulikpumpe (28) einen Kolben (37) einschließt, der gleitend verschiebbar in einem mit Fluid gefüllten Wandler-Zylinder (38) befestigt und durch eine Vorspanneinrichtung (39) in Kontakt mit dem Exzenter (34) vorgespannt ist, wodurch eine Drehung des Exzenters (34) eine Hin und Herbewegung des Kolbens (37) in dem Zylinder (38) und damit eine Druckbeaufschlagung des darin enthaltenen Fluids hervorruft.

5. Ein Fahrzeug (10) nach Anspruch 4, bei dem der mit Fluidt gefüllte Zylinder (38) eine Fluid-Auslassleitung einschließt, die ein Rückschlagventil (51) einschließt, über das ein in dem Zylinder mit Druck beaufschlagtes Fluid ein oder mehrere Elemente des nicht elektrischen Steuerkreises steuert.

6. Ein Fahrzeug (10) nach Anspruch 5, bei dem die Fluid-Auslassleitung eine Fluid-Entlastungsleitung (43) einschließt, die in Serie eine erste Strömungsdrossel (46), ein Rückschlagventil (47) und eine weitere Strömungsdrossel (48) einschließt, wobei die Fluid-Entlastungsleitung (43) einen Fluid-Einlass an den mit Fluid gefüllten Wandlerzylinder (38) bildet und weiterhin mit einem Puffer-Fluid-Behälter (49) zwischen den ersten (46) und weiteren (47) Strömungsdrosseln verbunden ist, um auf diese Weise Änderungen in dem Druck des Fluids in der Auslass-Hydraulikflüssigkeits-Leitung auszugleichen, die durch die Hin und Herbewegung des Kolbens (37) hervorgerufen werden.

7. Ein Fahrzeug (10) nach einem der Ansprüche 4 bis 6, bei dem der Kolben (37) eine an diesem befestigte Rolle (36) einschließt, die gegen den Exzenter (34) anliegt, um auf diese Weise Energie von dem Exzenter (34) auf den Kolben (37) zu übertragen.

8. Ein Fahrzeug (10) nach irgendeinem der vorhergehenden Ansprüche, bei dem das zweite Bremselement (13) mit einem Kolben (14) verbunden ist, der gleitend in einem mit Fluid gefüllten Bremszylinder (16) aufgenommen ist, wobei das elastisch verformbare Bauteil (19) auf den Kolben (14) einwirkt, und einer Fluid-Pumpe (31), die Fluid an den mit Fluid gefüllten Bremszylinder (16) über eine Zuführungsleitung im Sinne eines Entgegenwirkens zu der Wirkung des elastisch verformbaren Bauteils (19) zuführt.

9. Ein Fahrzeug (10) nach Anspruch 8, das ein Fluid-Freigabeventil (24) in einer Fluod-Entlastungsleitung (23) einschließt, die mit dem mit Fluid gefüllten Bremszylinder (16) verbunden ist, wobei das Fluid-Entlastungsventil (24) in eine normalerweise offene Konfiguration vorgespannt ist, wodurch Fluid aus dem Bremszylinder (16) ausströmt und das Fluid-Entlastungsventil so angeordnet ist, dass es durch Energie, die von dem Energie-Wandler (28) umgewandelt wird, wenn die Geschwindigkeit des Fahrzeuges (10) und/oder die von der Leistungsquelle erzeugte Energie den Schwellenwert übersteigt, in eine geschlossene Konfiguration gesteuert wird, wodurch der Fluid-Druck in dem Bremszylinder (16) der Wirkung des elastisch verformbaren Bauteils (19) entgegenwirkt.

10. Ein Fahrzeug (10) nach Anspruch 9, bei dem die Entlastungsleitung in Serie geschaltet mit dem Fluid-Entlastungsventil (24) ein Magnetspulen-Ventil (26) einschließt, das normalerweise in eine offene Konfiguration vorgespannt ist und ein Magnetspulen-Betätigungselement (53) einschließt, das bei seiner Ansteuerung der Vorspannung des Magnetspulen-Ventils (26) entgegenwirkt und bewirkt, dass das Magnetspulen-Ventil (26) eine geschlossene Konfiguration annimmt.

11. Ein Fahrzeug (10) nach Anspruch 9 oder 10, bei dem die Fluid-Entlastungsleitung (23) mit einem Fluid-Auslass oder einem Tank (27) an einem von dem Bremszylinder (16) entfernten Ende verbunden ist und bei dem das Fahrzeug (10) eine Proportional-Nebenschluss-Leitung (54) einschließt, das die Fluid-Entlastungsleitung (23) mit dem Auslass oder Tank (27) über ein Proportional-Steuerventil (56) verbindet, dessen Betätigung einen fortschreitend zunehmenden Auslass des unter Druck stehenden Fluids von dem Bremszylinder (16) hervorruft, wodurch das Anlegen der SAHR-Bremse (11) fortschreitend bewirkt wird.

12. Ein Fahrzeug (10) nach Anspruch 8 oder irgendeinem der vorhergehenden Ansprüche, die hierauf zurück bezogen sind, das einen Drucksensor (61) einschließt, der den Flluiddruck in dem Bremszylinder (16) misst, wobei der Drucksensor betriebsmäßig mit einem oder mehreren Alarmeinrichtungen zur Benachrichtigung über nachteilige Druckbedingungen in dem Bremszylinder (16) verbunden ist.

13. Ein Fahrzeug (10) nach Anspruch 11 oder irgendeinem der hierauf zurück bezogenen Ansprüche, bei dem das Proportional-Steuerventil (56) einen oder mehrere Anschlüsse (59) zur Zuführung eines unter Druck stehenden Fluids an ein oder mehrere Bremsen eines von dem Fahrzeug geschleppten Anhängers einschließt.

14. Ein Fahrzeug (10) nach Anspruch 10 oder irgendeinem hierauf zurück bezogenen Anspruch, bei dem das Magnetspulenventil (26) und das Proportional-Steuerventil (56) elektrisch betätigt sind und das Fahrzeug ein oder mehrere Steuereinrichtungen zur Steuerung des Betriebs dieser genannten Ventile (26, 56) einschließt.

15. Ein Fahrzeug (10) nach Anspruch 14, bei dem eine oder mehrere dieser Steuereinrichtungen (i) die Geschwindigkeit des Fahrzeuges (10) feststellt und (ii) feststellt, ob eine von einem Fahrer befohlene Parkbremsen-Anforderung existiert und die Einstellung der Ventile (26, 56) in Abhängigkeit von der festgestellten Geschwindigkeit und der Existenz oder dem Fehlen eines Parkbremsen-Anforderungsbefehls bestimmt.

## Revendications

1. Véhicule motorisé (10) comprenant une source de puissance pour produire de l'énergie afin de propulser le véhicule, un frein (11) de véhicule à ressort à desserrage hydraulique (SAHR) comprenant des premier (12) et second (13) éléments de frein pouvant s'engager l'un dans l'autre, dont le premier (12) est fixé à ou fait partie d'un élément rotatif du train d'entraînement du véhicule et le second (13) est monté de façon mobile non rotative sur le véhicule (10) de telle sorte que les premier et second éléments (12, 13) peuvent s'engager l'un dans l'autre et se séparer, l'engagement mutuel des éléments de frein (12, 13) occasionnant le freinage de la rotation de l'élément rotatif, le frein de véhicule SAHR (11) incluant (i) un élément élastiquement déformable (19) agissant sur le second élément de frein (13) de façon à contraindre les premier et second éléments de frein (12, 13) à un engagement mutuel et (ii) un circuit de commande non électrique pour appliquer une pression sur le second élément de frein (13) de façon à contrer l'action de l'élément élastiquement déformable (19) et maintenir normalement par ce moyen les premier et second éléments de frein (12, 13) séparés l'un de l'autre,
**caractérisé en ce que** le véhicule comprend un convertisseur d'énergie (28) pour produire de l'énergie dans le circuit de commande en proportion de la vitesse du véhicule (10) et/ou l'énergie produite par la source de puissance, le convertisseur d'énergie (28) alimentant le circuit de commande lorsque la vitesse du véhicule (10) et/ou l'énergie produite par la source de puissance est supérieure à un seuil et désalimentant le circuit de commande pour permettre un engagement mutuel des premier et second éléments (12, 13) sous l'influence de l'élément élastiquement déformable (19) lorsque la vitesse du véhicule (10) et/ou l'énergie produite par la source de puissance est inférieure au seuil.

2. Véhicule (10) selon la revendication 1, dans lequel le circuit de commande est un circuit de fluide de puissance et en ce que le convertisseur d'énergie (28) transforme l'énergie de rotation dans le train d'entraînement du véhicule (10 en une pression de fluide dans le circuit de commande.

3. Véhicule (10) selon la revendication 2, incluant au moins un arbre rotatif (33) dont la rotation se produit en proportion de la vitesse du véhicule (10) et/ou de l'énergie produite par la source de puissance, le convertisseur d'énergie incluant une pompe hydraulique (28) qui est entraînée par l'arbre rotatif (33) également en proportion de la vitesse du véhicule (10) et/ou de l'énergie produite par la source de puissance.

4. Véhicule (10) selon la revendication 3, dans lequel l'arbre rotatif (33) inclut un excentrique (34) et en ce que la pompe hydraulique (28) inclut un piston (37) qui est monté de manière coulissante dans un cylindre (38) de convertisseur rempli de fluide et sollicité par un dispositif de sollicitation (39) pour entrer en contact avec l'excentrique (34), au moyen de quoi la rotation de l'excentrique (34) provoque un mouvement alternatif du piston (37) dans le cylindre (38) et donc une pressurisation du fluide à l'intérieur de celui-ci.

5. Véhicule (10) selon la revendication 4, dans lequel le cylindre (38) rempli de fluide inclut une conduite de sortie de fluide incluant un clapet anti-retour (51) via laquelle le fluide sous pression dans le cylindre pilote un ou plusieurs éléments du circuit de commande non électrique.

6. Véhicule (10) selon la revendication 5, dans lequel la conduite de sortie de fluide inclut une conduite de purge de fluide (43) comportant, en série, un premier dispositif réducteur de débit (46), un clapet anti-retour (47) et un dispositif réducteur de débit complémentaire (48), la conduite de purge (43) définissant une entrée de fluide dans le cylindre de convertisseur rempli de fluide (38) et étant en plus connecté à un réservoir tampon (49) de fluide entre le premier dispositif réducteur de débit (46) et le dispositif réducteur de débit complémentaire (47), pour supporter par ce moyen les variations de pression de fluide la conduite de sortie de de fluide occasionnées par le mouvement alternatif du piston (37).

7. Véhicule (10) selon l'une quelconque des revendications 4 à 6, dans lequel le piston (37) inclut fixé sur celui-ci un galet (36) qui appuie contre l'excentrique (34) pour transférer par ce moyen l'énergie de l'excentrique (34) au piston (37).

8. Véhicule (10) selon l'une quelconque des revendications précédentes, dans lequel le second élément de frein (13) est connecté à un piston (14) qui est reçu de manière coulissante dans un cylindre de frein (16) rempli de fluide, l'élément élastiquement déformable (19) agissant sur le piston (14) et une pompe de fluide (31) alimentant du fluide sous pression jusqu'au cylindre de frein (16) rempli de fluide via une conduite d'alimentation tendant à contrer l'action de l'élément élastiquement déformable (19).

9. Véhicule (10) selon la revendication 8, incluant une soupape de décharge de fluide (24) dans une conduite d'évacuation de fluide (23) connectée au cylindre de frein (16) rempli de fluide, la soupape de décharge de fluide (24) étant sollicitée dans une configuration normalement ouverte au moyen de quoi le fluide sous pression s'évacue du cylindre de frein (16) et étant agencée pour être pilotée par de l'énergie convertie par le convertisseur d'énergie (28), et lorsque la vitesse du véhicule (10) et/ou l'énergie produite par la source de puissance est supérieure au seuil, dans une configuration fermée au moyen de quoi la pression de fluide dans le cylindre de frein (16) s'oppose à l'action de l'élément élastiquement déformable (19).

10. Véhicule (10) selon la revendication 9, dans lequel la conduite d'évacuation de fluide (23) inclut, connectée en série avec la soupape de décharge de fluide (24), une électrovanne (26) qui est sollicitée dans une configuration normalement ouverte et inclut un actionneur à solénoïde (53) qui, lorsqu'il est excité, s'oppose à la sollicitation de l'électrovanne (26), en occasionnant l'adoption par l'électrovanne (26) d'une configuration fermée.

11. Véhicule (10) selon la revendication 9 ou 10, dans lequel une conduite d'évacuation de fluide (23) relie une évacuation ou un réservoir de fluide (27) à une extrémité éloignée du cylindre de frein (16) et en ce que le véhicule (10) inclut une conduite de dérivation (24) proportionnelle raccordant la conduite d'évacuation (23) de fluide à l'évacuation ou au réservoir (27) via une vanne de régulation proportionnelle (56) dont l'actionnement occasionne une augmentation progressive de la purge du fluide sous pression depuis le cylindre de frein (16), en engendrant par cela progressivement l'application du frein SAHR (11).

12. Véhicule (10) selon la revendication 8 ou l'une quelconque des revendications précédentes dépendant de celle-ci, incluant un capteur de pression (61) détectant la pression de fluide dans le cylindre de frein (16), le capteur de pression étant connecté fonctionnellement à un ou plusieurs dispositifs d'alarme pour avertir de conditions de pression néfastes dans le cylindre de frein (16).

13. Véhicule (10) selon la revendication 11 ou l'une quelconque des revendications précédentes dépendant de celle-ci dans lequel la vanne de régulation proportionnelle (56) inclut un ou plusieurs raccords (59) pour alimenter du fluide jusqu'à un ou plusieurs freins d'une remorque tractée par le véhicule.

14. Véhicule (10) selon la revendication 10 ou l'une quelconque des revendications précédentes dépendant de celle-ci, dans lequel l'électrovanne (26) et la vanne de régulation proportionnelle (56) sont actionnées électriquement et le véhicule inclut un ou plusieurs dispositifs de commande pour commander le fonctionnement des dites vannes (26, 56).

15. Véhicule (10) selon la revendication 14, dans lequel un ou plusieurs dits contrôleurs détecte(nt) (i) la vitesse du véhicule (10) et (ii) si une demande de freinage de stationnement commandée par un conducteur existe, et détermine(nt) le réglage des dites vannes (26, 56) en fonction de la vitesse détectée et de l'existence ou non d'une demande de freinage de stationnement commandée.
